# EUROPÄISCHE PATENTANMELDUNG

(11) **EP 3 147 521 A1**
(43) Veröffentlichungstag der Anmeldung: **29.03.2017**
(21) Anmeldenummer: 15186663.9
(22) Anmeldetag: 24.09.2015
(51) Int. Cl.: F16C 33/10, F16F 9/53

(54) **GLEITLAGER MIT DÄMPFUNGSEIGENSCHAFT**

(71) Anmelder: Siemens Aktiengesellschaft, 80333 München (DE)
(72) Erfinder: Bentele, Stefan, 45473 Mülheim an der Ruhr (DE); Gebauer, Thomas, 47443 Moers (DE); Grau Sorarrain, Esteban, 40217 Düsseldorf (DE); Hiß, Florian, 45468 Mülheim an der Ruhr (DE); Schittenhelm, Rudolf Sebastian, 45128 Essen (DE); Schlüter, Dennis, 46569 Hünxe (DE); Steins, Hendrik, 45134 Essen (DE); Zhang, Ya, 47058 Duisburg (DE)

(57) **Zusammenfassung**

Die Erfindung betrifft eine Anordnung (1) zur Verminderung von Schwingungen eines Lagers, wobei in einer Kavität (7) ein elektrorheologisches oder magnetorheologisches Fluid (8) verwendet wird, das durch ein äußeres Feld derart verändert wird, dass die Viskosität sich so ändert, dass auftretende Schwingungsamplituden wirksam gedämpft werden.

## Beschreibung

Die Erfindung betrifft eine Anordnung umfassend eine um eine Rotationsachse drehbar gelagerte Welle, ein um die Welle angeordneten Gleitlager-Außenring, ein um den Gleitlager-Außenring angeordneten Dämpfer-Außenring, wobei zwischen dem Gleitlager-Außenring und dem Dämpfer-Außenring ein Fluid angeordnet ist, ferner umfassend eine Einrichtung zum Erzeugen eines äußeren Feldes.

Desweiteren betrifft die Erfindung ein Verfahren zur Dämpfung von Wellenschwingungen.

Lager werden in Maschinen eingesetzt, die eine drehbare Welle aufweisen. Um diese Welle ist in der Regel ein Gehäuse angeordnet. Die Welle wird üblicherweise über verschiedene Antriebsmechanismen in Rotation versetzt. Damit eine möglichst verlustfreie Rotation möglich ist, müssen die Wellen über geeignete Lager gelagert werden. In Strömungsmaschinen wie z. B. Dampfturbinen werden daher Öl-Gleitlager verwendet. Im Wesentlichen umfasst solch ein Gleitlager eine Lagerschale die einen Ölfilm aufweist, auf dem die Welle rotierbar angeordnet ist.

Solche Öl-Gleitlager werden nicht nur in Strömungsmaschinen, sondern auch in Turbomaschinen wie z. B. in elektrischen Generatoren verwendet.

Die Rotationsgeschwindigkeit der Wellen kann vergleichsweise hoch sein, so dass die Anforderung an ein Öl-Gleitlager vergleichsweise hoch ist. Es können Betriebszustände vorkommen, bei der die Welle und die Lagerkomponenten unzulässig hohe Schwingungen aufweisen. Solche unzulässig hohen Schwingungen können zu Schädigungen führen, die unerwünscht sind. Daher werden bestimmte Schwingungen toleriert, solange sie einen Grenzwert nicht überschreiten. Um die Schwingungen zu vermeiden, ist es bekannt, Wuchtgewichte einzubauen, die derart um den Rotor angeordnet werden, dass im Betriebszustand Schwingungen minimiert werden. Allerdings ist das Verteilen von Wuchtgewichten vergleichsweise aufwändig und würde zu einem großen Kosten- und Zeitfaktor führen.

Eine weitere Möglichkeit Schwingungen zu dämpfen erfolgt indem Gleitlager eingesetzt werden, die derart ausgebildet sind, dass durch eine geeignete Anordnung der Lagerkomponenten Schwingungen gedämpft werden. Hierbei kann so vorgegangen werden, dass Eigenfrequenzen die vorher bestimmbar sind durch eine Konstruktion des Gleitlagers nicht zu einer Schwingung des Systems aus Lager und Welle führt. Allerdings kann hierbei nach einer Inbetriebsetzung nicht jede Schwingung vermieden werden.

Aufgabe der Erfindung ist es eine weitere Möglichkeit anzugeben, Schwingungen zu vermeiden.

Diese Aufgabe wird gelöst durch eine Anordnung umfassend eine um eine Rotationsachse drehbar gelagerte Welle, ein um die Welle angeordneten Gleitlager-Außenring, ein um den Gleitlager-Außenring angeordneten Dämpfer-Außenring, wobei zwischen dem Gleitlager-Außenring und dem Dämpfer-Außenring ein Fluid angeordnet ist, ferner umfassend eine Einrichtung zum Erzeugen eines äußeren Feldes, wobei das Fließverhalten des Fluids durch das äußere Feld steuerbar ist.

Es wurde erkannt, dass Wellenschwingungen bzw. Rotorschwingungen nicht grundsätzlich vermieden werden können, weil sie bedingt durch physikalische Zusammenhänge entstehen. Dies hängt damit zusammen, dass die Lage der Eigenfrequenzen, die Resonanzdurchgänge sowie Änderung der Verteilung des Rotorgewichts auf die Lager in Folge Einkuppelvorgängen zwingend zu einem unausgewogenen Verhältnis führen, so dass Schwingungen entstehen. Mit der Erfindung wird dadurch vorgeschlagen, die Größe der Schwingungsamplituden zu beeinflussen, was durch eine aktive Beeinflussung möglich ist.

Die Erfindung schlägt nun vor, um eine Welle einen Gleitlager-Außenring anzuordnen. Zwischen dem Gleitlager-Außenring und der Welle ist ein Ölfilm bzw. ein anderes Gleitlagermedium angeordnet, das eine möglichst reibungsfreie Bewegung der Welle im Lager ermöglichen soll. Um den Gleitlager-Außenring ist ein Dämpfer-Außenring angeordnet. Zwischen dem Dämpfer-Außenring und dem Gleitlager-Außenring ist eine Kavität ausgebildet, in die ein Fluid angeordnet wird. Dies Fluid hat die physikalische Eigenschaft, dass das Fließverhalten durch ein äußeres Feld verändert werden kann. Die Anordnung weist daher erfindungsgemäß ferner eine Einrichtung zum Erzeugen eines äußeren Feldes auf.

Schwingungen der Welle werden erfasst und an eine Steuereinheit weitergegeben, die das äußere Feld beeinflussen kann. Das äußere Feld wird durch die Steuereinheit derart geändert, dass Schwingungen der Welle verhindert werden. Das Fließverhalten bzw. die Viskosität des Fluids muss daher schnell und reversibel gesteuert werden.

Ferner wird die Aufgabe dadurch gelöst, indem ein Verfahren eingesetzt wird, das zur Dämpfung von Wellenschwingungen ausgebildet ist, wobei um eine Welle eine Kavität gebildet wird, die mit einem Fluid gefüllt wird, deren Fließverhalten durch ein äußeres Feld verändert wird, wobei das äußere Feld derart geändert wird, dass Schwingungen der Welle verhindert werden.

Vorteilhafte Weiterbildungen sind in den Unteransprüchen angegeben.

So wird in einer ersten vorteilhaften Weiterbildung das äußere Feld als ein elektrisches Feld ausgebildet.

Ein äußeres elektrisches Feld ist im Wesentlichen durch eine kondensatorähnliche Anordnung möglich. Der Kondensator kann durch eine spezielle Einrichtung sein elektrisches Feld schnell und reversibel ändern, so dass das Fluid sein Fließverhalten ebenso schnell und reversibel ändern kann.

Vorteilhafterweise ist das Fluid eine elektrorheologische Flüssigkeit. Elektrorheologische Flüssigkeiten weisen die Eigenschaft auf, dass diese ihr Fließverhalten in Abhängigkeit eines äußeren elektrischen Feldes verändern können.

In einer weiteren vorteilhaften Weiterbildung ist das äußere Feld ein Magnetfeld.

Äußere Magnetfelder lassen sich durch eine Spule und magnetisierbare Materialien hervorrufen.

Vorteilhafterweise wird hier eine magnetorheologische Flüssigkeit verwendet. magnetorheologische Flüssigkeiten haben die Eigenschaft, ihr Fließverhalten in Abhängigkeit eines äußeren Magnetfeldes zu ändern.

In einer vorteilhaften Weiterbildung ist der Gleitlager-Außenring in der Rotationsachsen-Richtung gesehen durch ein vorderes Gleitlager-Außenring-Ende und ein hinteres Gleitlager-Außenring-Ende begrenzt, wobei die Einrichtung zum Erzeugen des elektrischen Feldes in Rotationsachsen-Richtung um den Gleitlager-Außenring angeordnet ist. Das bedeutet, dass das Gleitlager in Rotationsachsen-Richtung eine Länge L aufweist. Die Einrichtung zum Erzeugen eines elektrischen Feldes ist somit vor und hinter dem Gleitlager in Rotationsachse-Richtung angeordnet. Dies ist eine platzsparende und kostengünstige Anordnung der Einrichtung.

Vorteilhafterweise weist hierbei die Einrichtung eine erste Platte und eine zweite Platte auf, wobei die erste Platte vor dem vorderen Gleitlager-Außenring-Ende und die zweite Platte vor dem hinteren Gleitlager-Außenring-Ende angeordnet ist. Vorteilhafterweise wird die erste und zweite Platte mit einer elektrischen Spannungsversorgung verbunden. Somit ist eine einfache Möglichkeit angegeben, ein elektrisches Feld in die Kavität zwischen Gleitlager-Außenring und Dämpfer-Außenring einzubringen.

In einer weiteren vorteilhaften Weiterbildung ist zwischen dem Gleitlager-Außenring und dem Dämpfer-Außenring eine Kavität ausgebildet, in der das Fluid angeordnet ist, wobei die Kavität aus mehreren Teil-Kavitäten ausgebildet ist.

Durch die Anordnung von mehreren über den Umfang verteilte Teil-Kavitäten können spezielle Schwingungsformen gedämpft werden. Darüber hinaus können mehrere elektrische Felder ausgebildet werden, die die Teil-Kavitäten individuell beeinflussen. Somit können verschiedene Schwingungsmoden gedämpft werden.

In einer weiteren vorteilhaften Weiterbildung sind die Teil-Kavitäten durch Öffnungen strömungstechnisch miteinander verbunden. Durch den Strömungsausgleich zwischen den Teil-Kavitäten lassen sich weitere Dämpfungseigenschaften erzeugen.

In einer weiteren vorteilhaften Weiterbildung wird der Gleitlager-Außenring am Dämpfer-Außenring abgestützt.

Vorteilhafterweise werden hier Federstege eingesetzt, die in der 3-Uhr- und 9-Uhr-Position angeordnet sind.

Die Abstützung am Dämpfer-Außenring führt zu einer Abtragung der statischen Vorlast auf dem Lager. Das rheologische Fluid muss dann lediglich die dynamischen Anteile der Bewegung verarbeiten. In einer alternativen Ausführungsform kann hierzu die statische Abstützung auch entsprechend dem hydrostatischen Anhebe-Prinzip erfolgen.

In einer weiteren vorteilhaften Weiterbildung weist die Anordnung eine Messeinrichtung zum Ermitteln von Vibrationen oder Schwingungen der Welle auf, wobei eine Vorrichtung vorgesehen ist zum verändern des äußeren Feldes, wobei die Veränderung des äußeren Feldes in Abhängigkeit der mit der Messeinrichtung ermittelten Vibration oder Schwingungen erfolgt.

Durch Anlegen eines in der Frequenz veränderlichen Stroms wird die Viskosität des Fluids verändert, wodurch sowohl die Steifigkeit wie auch die Dämpfungseigenschaften verändert werden. Die Regelung der Viskosität erfolgt über die Messung von Rotorschwingungsamplituden mittels Wellenschwingungsgebern und einer Signalverarbeitung mittels eines geeigneten Regelalgorithmus in einem Controller, der die elektrische Spannung als Stellsignal ausgibt.

Mit der Erfindung wird somit vorgeschlagen ein hydrodynamisches Gleitlager derart weiterzubilden, dass in einem weiteren Spalt ein adaptives Fluid eingesetzt wird, um die Steifigkeit- und Dämpfungseigenschaften aktiv zu beeinflussen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wozu Erläuterungen dienlich, in schematisierter oder leicht verzerrter Form ausgeführt. Im Hinblick auf Ergänzungen der in den Zeichnungen unmittelbar erkennbaren Lehren wird auf den einschlägigen Stand der Technik verwiesen.

Es zeigen
- Figur 1: eine Querschnittsansicht durch eine erfindungsgemäße Anordnung (in Rotationsachsen-Richtung),
- Figur 2: eine Seitenansicht der erfindungsgemäßen Anordnung.

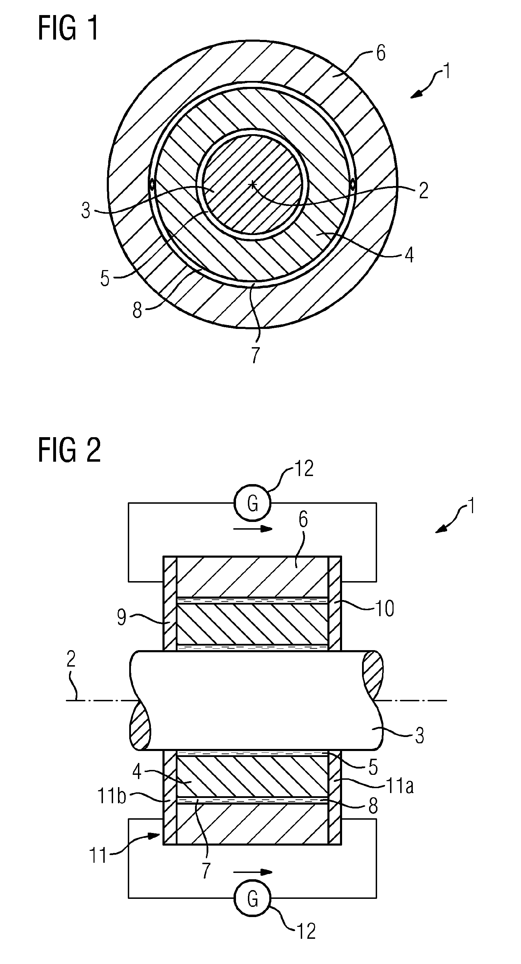

Figur 1 zeigt eine Querschnittsansicht der erfindungsgemäßen Anordnung 1. Die Anordnung 1 umfasst eine um eine Rotationsachse 2 drehbar gelagerte Welle 3. Um die Welle 3 ist ein Gleitlager-Außenring 4 angeordnet. Zwischen der Welle 3 und dem Gleitlager-Außenring 4 ist ein hydrodynamischer Schmierspalt 5 ausgebildet, der mit einem Medium, z. B. Öl, gefüllt ist und dadurch dieselbe Funktionsweise aufweist wie ein herkömmliches Gleitlager.

Um den Gleitlager-Außenring 4 ist ein Dämpfer-Außenring 6 angeordnet. Zwischen dem Dämpfer-Außenring 6 und dem Gleitlager-Außenring 4 ist eine Kavität 7 angeordnet, in die ein Fluid 8 angeordnet ist.

Im Betrieb rotiert die Welle 3 um die Rotationsachse 2 und wird über das Öl im hydrodynamischen Schmierspalt 5 gelagert. Schwingungen der Welle 3 werden auf den Gleitlager-Außenring 4 übertragen. Die Anordnung 1 weist desweiteren ein nicht näher dargestelltes äußeres Feld in der Figur 1 auf. Das äußere Feld beeinflusst das Fließverhalten des Fluids 8. Schwingungen der Welle 3 werden demnach durch ein veränderbares äußeres Feld minimiert.

Das Fließverhalten des Fluids ist durch das äußere Feld steuerbar. Das äußere Feld ist in einer ersten Ausführungsform ein elektrisches Feld. In einer zweiten Ausführungsform ist das äußere Feld ein magnetisches Feld. Im Falle eines elektrischen Feldes ist das Fluid 8 ein elektrorheologisches Fluid 8, das bedeutet, dass die Viskosität des elektrorheologischen Fluids 8 sich durch ein elektrisches Feld ändern lässt.

Im Falle eines magnetischen äußeren Feldes ist das Fluid 8 ein magnetorheologisches Fluid 8, das bedeutet, dass die Viskosität des Fluids 8 sich durch ein Magnetfeld ändern lässt. Somit ist die Viskosität des Fluids 8 durch ein äußeres Feld steuerbar.

Die Figur 2 zeigt eine Seitenansicht der Anordnung 1. Der Gleitlager-Außenring 4 wird durch ein vorderes Gleitlager-Außenring-Ende 9 begrenzt. Auf der anderen Seite wird der Gleitlager-Außenring durch ein hinteres Gleitlager-Außenring-Ende 10 in der Rotationsachsenrichtung begrenzt.

Die Anordnung umfasst ferner einen Kondensator 11, der eine erste Kondensatorplatte 11a und eine zweite Kondensatorplatte 11b aufweist. Die erste Kondensatorplatte 11a und die zweite Kondensatorplatte 11b sind mit einer Spannungsquelle 12 verbunden. Mit Hilfe der Spannungsquelle 12 und dem Kondensator 11 wird ein elektrisches Feld in der Kavität 7 erzeugt. Das führt dazu, dass die Viskosität des Fluids 8 in der Kavität 7 verändert wird.

Die Kavität 7 ist aus mehreren Teil-Kavitäten (nicht dargestellt) ausgebildet. Zwischen den Teil-Kavitäten sind Öffnungen angeordnet, die eine strömungstechnische Verbindung zwischen den Teil-Kavitäten herstellen.

Desweiteren weist die Anordnung eine Messeinrichtung zum Ermitteln von Vibrationen oder Schwingungen der Welle (nicht dargestellt) und einer Vorrichtung, die als Controller ausgeführt werden kann, die zum Verändern des äußeren Feldes ausgebildet ist. Die Veränderung des äußeren Feldes erfolgt über die Spannungsquelle 12. Über die Messeinrichtung werden Vibrationen oder Schwingungen ermittelt, die dann zur Vorrichtung weitergeleitet werden und diese dann ermitteln wie das äußere elektrische Feld ausgebildet sein muss, um die Vibrationen oder Schwingungen möglichst wirksam zu dämpfen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (1) umfassend
eine um eine Rotationsachse (2) drehbar gelagerte Welle (3),
ein um die Welle (3) angeordneten Gleitlager-Außenring (4), ein um den Gleitlager-Außenring angeordneten Dämpfer-Außenring (6),
wobei zwischen dem Gleitlager-Außenring (4) und dem Dämpfer-Außenring (6) ein Fluid angeordnet ist,
ferner umfassend eine Einrichtung zum Erzeugen eines äußeren Feldes,
**dadurch gekennzeichnet, dass**
das Fließverhalten des Fluids durch das äußere Feld steuerbar ist.

2. Anordnung (1) nach Anspruch 1,
wobei das äußere Feld ein elektrisches Feld ist.

3. Anordnung (1) nach Anspruch 1,
wobei das äußere Feld ein magnetisches Feld ist.

4. Anordnung (1) nach Anspruch 1 oder 2,
wobei das Fluid ein elektrorheologisches Fluid ist.

5. Anordnung (1) nach Anspruch 1 oder 3,
wobei das Fluid ein magnetorheologisches Fluid ist.

6. Anordnung (1) nach einem der vorhergehenden Ansprüche,
wobei die Länge (L) des Gleitlager-Außenrings (4) in der Rotationsachsen-Richtung gesehen durch ein eines vorderen Gleitlager-Außenring-Ende (9) und eines hinteren Gleitlager-Außenring-Ende (10) begrenzt ist,
wobei die Einrichtung zum Erzeugen des elektrischen Feldes in Rotationsrichtung um den Gleitlager-Außenring (4) angeordnet ist.

7. Anordnung (1) nach Anspruch 6,
wobei die Einrichtung eine erste Platte und eine zweite Platte umfasst,
wobei die erste Platte vor dem vorderen Gleitlager-Außenring-Ende (9) und die zweite Platte vor dem hinteren Gleitlager-Außenring-Ende (10) angeordnet ist.

8. Anordnung (1) nach Anspruch 7,
wobei die erste und zweite Platte mit einer elektrischen Spannungsversorgung verbunden ist.

9. Anordnung (1) nach einem der vorhergehenden Ansprüche,
wobei zwischen dem Gleitlager-Außenring (4) und dem Dämpfer-Außenring (6) eine Kavität (7) ausgebildet ist, in der das Fluid angeordnet ist, wobei die Kavität (7) aus mehreren Teil-Kavitäten ausgebildet ist.

10. Anordnung (1) nach Anspruch 9,
wobei die Teil-Kavitäten in Umfangsrichtung angeordnet sind.

11. Anordnung (1) nach Anspruch 10,
wobei die Teil-Kavitäten durch Öffnungen strömungstechnischen miteinander verbunden sind.

12. Anordnung (1) nach einem der vorherigen Ansprüche,
wobei der Gleitlager-Außenring (4) am Dämpfer-Außenring (6) abgestützt ist.

13. Anordnung (1) nach Anspruch 12,
wobei die Abstützung über Federstege ausgebildet ist.

14. Anordnung (1) nach Anspruch 10,
wobei ein Federsteg in der 3-Uhr-Position und ein zweiter Federsteg in der 9-Uhr-Position angeordnet ist.

15. Anordnung (1) nach einem der vorhergehenden Ansprüche,
mit einer Messeinrichtung zum Ermitteln von Vibrationen der Welle,
mit einer Vorrichtung zum Verändern des äußeren Feldes, wobei die Veränderung des äußeren Feldes in Abhängigkeit der mit der Messeinrichtung ermittelten Vibration erfolgt.

16. Verfahren zur Dämpfung von Wellenschwingungen,
wobei um eine Welle (3) eine Kavität (7) gebildet wird, die mit einem Fluid gefüllt wird, dessen Fließverhalten durch ein äußeres Feld verändert wird, wobei das äußere Feld derart geändert wird, dass Schwingungen der Welle (3) verhindert werden.

17. Verfahren nach Anspruch 16,
wobei ein elektrorheologisches Fluid verwendet wird.

18. Verfahren nach Anspruch 16,
wobei ein magnetorheologisches Fluid verwendet wird.
